Europäisches Patentamt

European Patent Office

Office européen des brevets

(19)

(11) Numéro de publication : **0 016 669**
**B1**

(12) # FASCICULE DE BREVET EUROPÉEN

(45) Date de publication du fascicule du brevet :
14.09.83

(51) Int. Cl.³ : **F 16 B 37/12, F 16 B 37/00**

(21) Numéro de dépôt : **80400198.0**

(22) Date de dépôt : **08.02.80**

(54) Manchon d'assemblage pour la fixation d'une vis dans un objet, notamment en matériau tendre.

(30) Priorité : 15.03.79 FR 7906611

(43) Date de publication de la demande :
01.10.80 Bulletin 80/20

(45) Mention de la délivrance du brevet :
14.09.83 Bulletin 83/37

(84) Etats contractants désignés :
AT BE CH DE GB IT LU NL SE

(56) Documents cités :
FR A 1 303 509
FR A 1 308 201
FR A 1 376 398
FR A 1 416 714
FR A 1 506 720
FR A 2 400 139
GB A 1 045 122
US A 3 280 874

(73) Titulaire : **SHUR-LOK INTERNATIONAL S.A. Société dite:**
**Rue du Midi 7-9**
**B-4822 Petit-Rechain (BE)**

(72) Inventeur : **Dessouroux, Alexis Albert Jean Francis**
**49 Rue Cockerill**
**B-4880 Spa (BE)**

(74) Mandataire : **Moncheny, Michel et al**
**c/o Cabinet Lavoix 2 Place d'Estienne d'Orves**
**F-75441 Paris Cedex 09 (FR)**

## Manchon d'assemblage pour la fixation d'une vis dans un objet, notamment en matériau tendre

La présente invention est relative à un manchon d'assemblage destiné à la fixation d'une vis dans un objet, notamment en un matériau tendre.

Dans le cas de fixation de pièces sur des objets en matériau tendre, tel que l'aluminium, le plastique etc... on rencontre fréquemment des difficultés, lorsque les pièces doivent être montées et démontées souvent. En effet, ces opérations entraînent rapidement une détérioration des filetages des trous taraudés pratiqués dans l'objet en un matériau tendre, surtout lorsque les vis de fixation sont en un matériau relativement dur tel que l'acier. Il est donc déjà connu de placer dans des trous taraudés des objets, des manchons d'assemblage vissés dans ces trous taraudés et servant de pièce intermédiaire, interposée entre l'objet en un matériau tendre dont elle est rendue solidaire et la vis de fixation qui, elle, peut être démontée ou remontée autant de fois qu'on le souhaite sans détérioration aucune du filetage du trou taraudé de cet objet. D'ailleurs, il serait souhaitable que le manchon lui-même puisse être remplacé également car il est naturellement exposé aussi à l'usure lorsque les montages et démontages sont très nombreux.

Le FR-A-1 308 201 décrit un manchon comportant un filetage adapté à celui d'un trou taraudé de l'objet, un filetage intérieur adapté à une vis ou autre organe analogue et, à l'une de ses extrémités un prolongement cylindrique qui est dépourvu de filetages et dont le diamètre extérieur est égal ou inférieur au diamètre intérieur du filetage extérieur du manchon.

Lors de la pose de ce manchon dans l'objet, le prolongement dépourvu de filetages est repoussé vers l'extérieur contre la paroi intérieure du trou par un outil ou poinçon qui vient s'appuyer sur un épaulement radial annulaire ménagé à l'intérieur du prolongement. L'effort excercé par l'outil provoque alors le fluage du métal du prolongement qui, en déformant l'entrée du trou, est sensé se lier intimement avec le métal de l'objet. La déformation du métal tant du prolongement que de l'entrée du trou correspond ainsi à un fluage, la déformation étant progressive en suivant la progression de l'outil. Ce manchon de la technique antérieure présente notamment les inconvénients suivants.

Le métal du prolongement étant repoussé radialement vers l'extérieur par un poinçon, le diamètre intérieur du prolongement doit satisfaire à des tolérances serrées ce qui rend la fabrication des manchons coûteuse. Il en est d'ailleurs de même pour le diamètre extérieur qui doit être adapté très précisément au diamètre de l'entrée du trou pratiqué dans l'objet.

Par ailleurs, du fait du fluage du métal du prolongement et de la paroi du trou à l'entrée de celui-ci, il se crée un blocage non seulement radial mais également axial, le bourrelet formé extérieurement sur le prolongement interdisant tout démontage ultérieur du manchon. Ce dernier ne peut donc pas être remplacé.

D'après le GB-A-1 045 122 et le FR-A-2 400 139, on connaît également un manchon comportant un filetage extérieur adapté à celui d'un trou taraudé dudit objet, un filetage intérieur adapté à celui de ladite vis, ou autre organe analogue et à l'une de ces extrémités un prolongement cylindrique qui est dépourvu de filetage et dont le diamètre extérieur est égal ou inférieur au diamètre intérieur du filetage extérieur du manchon, ce prolongement se terminant par un rebord annulaire extérieur destiné à assurer l'appui pour un outil à effort axial, lors de la pose du manchon, ce prolongement pouvant être déformé par flambage vers l'extérieur.

Dans le cas du GB-A-1 045 122, le blocage en rotation du manchon est obtenu au moyen de cannelures, tandis que dans le FR-A-2 400 139, ce même effet est réalisé par les sommets d'un hexagone, aussi bien les cannelures que ces sommets étant destinés à venir s'imprimer dans la surface extérieure de la pièce recevant le manchon. Or, ces dispositions antérieures présentent un inconvénient grave. En effet, si la pièce recevant le manchon est sollicitée, particulièrement en flexions alternées, l'impression des cannelures ou des sommets de l'hexagone provoquera des augmentations de contrainte importantes pouvant entraîner une rupture de la pièce en fatigue.

L'invention a notamment pour but de remédier aux inconvénients de ces manchons connus.

Elle a donc pour objet un manchon tel que défini ci-dessus qui est caractérisé en ce que ledit rebord annulaire extérieur présente un diamètre extérieur qui est égal ou inférieur au diamètre extérieur du filetage extérieur du manchon et que le prolongement est bloqué dans les filets correspondants du trou taraudé par ledit flambage vers l'extérieur.

Grâce à ces caractéristiques, le blocage en rotation du manchon fileté n'est pas obtenu par le rebord annulaire extérieur mais par la mise en prise du prolongement dans les sommets des filets de la pièce. Or, ces filets ne sont sollicités ni par le filetage du manchon, ni par les flexions éventuelles de la pièce recevant ce dernier. En effet, si la pièce est soumise à des efforts de flexion, les sommets des filets sont libres et peuvent se déformer sans contrainte. L'impression du prolongement ne provoquera donc aucune augmentation des contraintes puisque les sommets des filets sont pratiquement libres de toutes contraintes.

Un autre avantage résultant des caractéristiques de l'invention consiste en ce que le prolongement n'a pas besoin de présenter des cotes précises car lors du flambage, le métal se déforme vers l'extérieur jusqu'à ce qu'il se trouve arrêté par la paroi du trou.

Même après plusieurs remplacements du manchon ce qui inévitablement détériore plus ou moins les filets du trou, le métal s'adapte par le flambage à la forme de la paroi de ce trou. On peut ainsi utiliser toujours des manchons de mêmes dimensions.

Enfin, le remplacement du manchon peut être exécuté très facilement car le prolongement s'est adapté au filetage du trou de l'objet et on peut donc dévisser l'ensemble sans problèmes.

D'autres caractéristiques et avantages de l'invention apparaîtront au cours de la description qui va suivre, donnée uniquement à titre d'exemple et faite en se référant au dessin annexé, sur lequel :

la Figure 1 est une vue partiellement extérieure et partiellement en coupe d'un manchon d'assemblage suivant l'invention ;

la Figure 2 est une vue en coupe axiale suivant la ligne 2-2 de la Fig. 1 de la portion intérieure du manchon suivant l'invention ;

la Figure 3 représente une vue en coupe d'une portion d'objet en un matériau tendre dans lequel est pratiqué un trou taraudé destiné à recevoir le manchon suivant l'invention ;

la Figure 4 représente cette même portion d'objet au cours de la mise en place du manchon ;

la Figure 5 est une vue analogue à celle de la Fig. 4, le manchon étant fixé dans le trou taraudé de l'objet ; et

la Figure 6 est une vue analogue illustrant la dépose d'un manchon suivant l'invention.

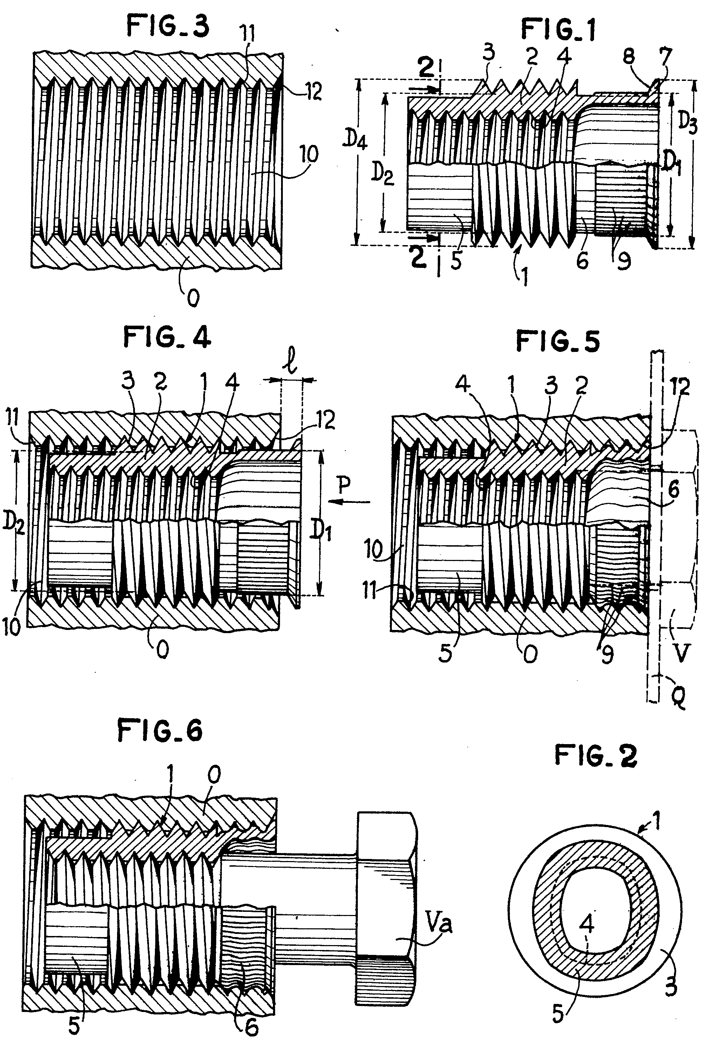

Sur les Fig. 1 et 2, on a représenté le mode de réalisation préféré du manchon d'assemblage suivant l'invention.

Ce manchon 1 qui est de forme générale cylindrique comporte essentiellement trois portions à savoir :

— une portion intermédiaire 2 pourvue d'un filetage extérieur 3 et d'un filetage intérieur 4 ;

— une portion d'extrémité 5 (Fig. 2) à section à peu près elliptique, dépourvue de filetage extérieur, mais dans laquelle se prolonge le filetage intérieur 4 ; cette portion est essentiellement destinée à former frein de filet ; et

— une portion d'extrémité ou prolongement 6 qui est dépourvue de tout filetage et dont le diamètre extérieur $D_1$ est égal ou inférieur au diamètre intérieur $D_2$ (Fig. 4) du filetage extérieur 3 du manchon.

Le prolongement 6 qui est de section circulaire se termine par une collerette 7 s'étendant vers l'extérieur et dont la face arrière 8 est de forme tronconique.

Ce rebord annulaire présente un diamètre extérieur $D_3$ qui est égal ou inférieur au diamètre extérieur $D_4$ du filetage extérieur 3 du manchon.

De plus, le prolongement 6 comporte un moletage sur sa surface extérieure, formé par exemple par des stries axiales 9.

La Fig. 3 représente une portion d'un objet O auquel il convient de fixer une pièce à l'aide d'une vis. A cet effet, cet objet O est pourvu d'un trou 10 borgne ou non dans lequel est taraudé un filetage 11. Un chanfrein 12 est de préférence prévu à l'entrée de ce trou taraudé 10. L'objet O peut notamment être réalisé en un matériau tendre ou ductile tel que l'aluminium, le plastique etc..,

tandis que le manchon est réalisé de préférence en un matériau relativement dur, tout en étant déformable facilement. L'acier, par exemple, convient à cet effet.

Les Fig. 4 et 5 représentent la mise en place du manchon dans le trou taraudé 10 de l'objet O.

On engage le manchon 1 par son filetage extérieur 3 dans le filetage intérieur 11 du trou 10 et ce jusqu'à une profondeur déterminée de manière telle que le prolongement 6 du manchon 1 dépasse du plan de la face d'entrée du trou 10 d'une certaine longueur l déterminée en fonction des dimensions et des caractéristiques de freinage demandées au manchon 1.

Cela étant fait, on peut à l'aide d'un maillet ou mieux à l'aide d'une pince à riveter se reprenant dans le filetage intérieur 4 du manchon 1, exercer une pression axiale P sur sa collerette 7.

Le prolongement 6 dont l'épaisseur de paroi est plus faible par rapport à celle du reste du manchon 1 se gonfle sous l'effort P et se déforme plastiquement par flambage en franchissant la limite élastique du métal et en faisant mordre les stries externes 9 dans les premiers filets d'entrée du filetage intérieur 11 du trou 10. Dès l'instant où la collerette 7 du manchon 1 arrive en contact avec le chanfrein 12 du trou 10, l'installation est terminée et le manchon prêt à servir.

La Fig. 5 montre un assemblage terminé d'un objet O et d'une plaque Q à l'aide d'une vis V qui est engagée dans le filetage intérieur 4 du manchon 1. Grâce à la portion déformée elliptique 5, cette vis est freinée dans le manchon 1.

On voit donc que le manchon 1 peut être installé dans un trou taraudé d'un objet quelconque pourvu que ce trou présente un filetage de dimensions appropriées et éventuellement un chanfrein à son entrée pour y adapter la collerette 7 du manchon 1. A part ce chanfrein éventuel, l'objet O n'a donc besoin d'aucune préparation spéciale consistant soit à y ménager un chambrage d'entrée, soit à tarauder sur une profondeur très précise ou autre.

On notera en outre que le manchon suivant l'invention peut être utilisé très avantageusement pour obtenir un freinage de vis dans un objet plein. En effet, le moyen le plus usuel pour freiner une vis dans un taraudage est de déformer d'une façon ou d'une autre la partie femelle du filetage. Lorsque cette partie femelle se trouve dans un objet plein, la déformation du filetage est naturellement impossible. Il faut alors rapporter une pièce spéciale, telle qu'une rondelle-frein ou autre, qui peut être déformée et assurer le freinage de cette vis par rapport à l'objet.

Le manchon suivant l'invention évite l'utilisation d'une telle pièce intermédiaire de freinage de la vis.

La Fig. 6 illustre un mode de démontage très commode du manchon suivant l'invention. Un tel démontage peut être nécessaire après un grand nombre de vissages de la vis V (Fig. 5) qui pourraient détériorer le filetage intérieur 4 du manchon 1.

Comme représenté sur la Fig. 6, le démontage du manchon 1 nécessite l'emploi d'une simple vis Va partiellement filetée sur une longueur approximativement égale à la longueur du filetage intérieur 4 du manchon 1.

Il suffit par un mouvement de rotation d'engager de toute sa longueur filetée la vis dans le filetage intérieur 4 du manchon 1.

On continue ce mouvement de rotation qui a pour effet, étant donné que le filetage de la vis Va est entièrement engagé dans le manchon 1, d'entraîner simultanément la vis Va et le manchon 1, tout en coinçant celui-ci sur la vis Va.

De ce fait, le manchon 1 a tendance à progresser dans le filetage intérieur 11 du trou 10 et par ce fait même à désolidariser son moletage 9 du filetage 11 du fait de la tension appliquée par le moletage 9. En effet, la collerette 7 ne peut pas progresser dans le filetage 11 du trou 10. Il est à remarquer que cette désolidarisation entraîne une déformation plastique du manchon 1 tendant à remettre celui-ci dans sa configuration initiale représentée sur la Fig. 1.

A partir du moment où le moletage 9 est désolidarisé du filetage 11 du trou 10, on peut par un mouvement de rotation inverse, dégager l'ensemble vis Va-manchon 1 du trou 10, qui, dès cet instant est prêt pour l'installation d'un nouveau manchon 1. Ce dernier est donc facilement interchangeable.

## Revendications

1. Manchon d'assemblage destiné à la fixation d'une vis dans un objet, notamment en un matériau tendre, ce manchon comportant un filetage extérieur (3) adapté à celui d'un trou taraudé (10) dudit objet (O), un filetage intérieur (4) adapté à celui de ladite vis (V), ou autre organe analogue et à l'une de ces extrémités un prolongement cylindrique (6) qui est dépourvu de filetage et dont le diamètre extérieur (D1) est égal ou inférieur au diamètre intérieur (D2) du filetage extérieur (3) du manchon (1), ce prolongement (6) se terminant par un rebord annulaire extérieur (7) destiné à assurer l'appui pour un outil à effort axial, lors de la pose du manchon, ce prolongement pouvant être déformé par flambage vers l'extérieur, caractérisé en ce que ledit rebord annulaire extérieur (7) présente un diamètre extérieur (D3) qui est égal ou inférieur au diamètre extérieur (D4) du filetage extérieur (3) du manchon (1), et que le prolongement (6) est bloqué dans les filets correspondants (11) du trou taraudé (10) par ledit flambage vers l'extérieur.

2. Manchon suivant la revendication 1, caractérisé en ce que la face (8) dudit rebord tourné vers le filetage extérieur (3) du manchon (1) est de forme tronconique adaptée à celle d'un chanfrein (12) pratiqué autour de l'entrée du trou taraudé (10) de l'objet (O).

3. Manchon suivant l'une quelconque des revendications 1 et 2, caractérisé en ce qu'il comporte des moyens (5) de freinage de filets destinés à bloquer une vis (V) qui y est engagée.

4. Manchon suivant la revendication 3, caractérisé en ce que lesdits moyens de freinage comprennent une portion d'extrémité (5) du manchon (1) opposée audit prolongement (6) et déformée de manière à revêtir une forme à peu près elliptique.

5. Dispositif assemblé formé d'un objet et d'une pièce rapportée sur cet objet (O) à l'aide d'une vis, ledit objet (O) comportant un trou taraudé (10), caractérisé en ce qu'il comprend un manchon (1) suivant l'une quelconque des revendications 1 à 4, ledit manchon (1) étant engagé dans le trou (10) de l'objet (O), son prolongement (6) étant déformé par flambage et en prise avec les filets de l'entrée dudit trou taraudé (10).

## Claims

1. An assembly sleeve for fixing a screw in an object, in particular of a soft material, said sleeve comprising an outer screwthread (3) adapted to the screwthread of a tapped hole (10) in said object (O), an inner screwthread (4) adapted to the screwthread of said screw (V) or other like member and, at one of its ends, a cylindrical extension (6) which is devoid of screwthreads and has an outside diameter (D1) which is equal to or less than the inside diameter (D2) of the outer screwthread (3) of the sleeve (1), this extension (6) terminating in an outer annular flange (7) adapted to provide a support for a tool which exerts an axial force when mounting the sleeve, it being thus possible to deform the extension by an outward buckling thereof, characterized in that said outer annular flange (7) has an outside diameter (D3) which is equal to or less than the outside diameter (D4) of the outer screwthread (3) of the sleeve (1), and the extension (6) is locked in the corresponding threads (11) of the tapped hole (10) by said outward buckling.

2. A sleeve according to claim 1, characterized in that the face (8) of said flange facing the outer screwthread (3) of the sleeve (1) has a frustoconical shape which is adapted to that of a chamfer (12) formed around the entrance of the tapped hole (10) in the object (O).

3. A sleeve according to claim 1 or 2, characterized in that it comprises thread braking means (5) adapted to lock a screw (V) engaged therein.

4. A sleeve according to claim 3, characterized in that said braking means comprise an end portion (5) of the sleeve (1) remote from said extension (6) and so deformed as to have a roughly elliptical shape.

5. An assembled device formed by an object and a member attached to said object (O) by means of a screw, said object (O) comprising a tapped hole (10), characterized in that the device comprises a sleeve (1) according to any one of the claims 1 to 4, said sleeve (1) being engaged in the hole (10) of the object (O), its extension (6) being deformed by a buckling thereof and engaged with the screwthreads of the entrance of said tapped hole (10).

## Ansprüche

1. Montagemuffe zum Befestigen einer Schraube in einem Gegenstand, insbesondere aus einem weichen Material, mit einem Außengewinde (3), das demjenigen eines Gewindeloches (10) des Gegenstandes (O) angepaßt ist, mit einem Innengewinde (4), das demjenigen der Schraube (V) oder eines anderen ähnlichen Teiles angepaßt ist und mit einem zylindrischen Verlängerungsstück (6) an einem ihrer Enden, das gewindelos ist und dessen Außendurchmesser (D1) dem Innendurchmesser (D2) des Außengewindes (3) der Muffe (1) entspricht oder kleiner als dieser ist, wobei dieses Verlängerungsstück (6) in einem ringförmigen Außenflansch (7) endet, der während der Anbringung der Muffe ein Werkzeug zur Ausübung einer Axialkraft abstützt, wobei das Verlängerungsstück durch Knickung nach außen verformbar ist, dadurch gekennzeichnet, daß der Außendurch-.messer (D3) des ringförmigen Außenflansches (7) dem Außendurchmesser (D4) des Außengewindes (3) der Muffe (1) entspricht oder kleiner als dieser ist und daß das Verlängerungsstück (6) in den entsprechenden Gewindegängen (11) des Gewindeloches (10) durch die Auswärtsknickung gesichert ist.

2. Muffe nach Anspruch 1, dadurch gekennzeichnet, daß die dem Außengewinde (3) zugekehrte Fläche (8) des Flansches in Anpassung an eine die Öffnung des Gewindeloches (10) des Gegenstandes (O) umgebende Abschrägung (12) kegelstumpfförmig ausgebildet ist.

3. Muffe nach einem der Ansprüche 1 und 2, dadurch gekennzeichnet, daß sie Gewindehemmittel (5) zur Sicherung einer in diese eingreifenden Schraube (V) aufweist.

4. Muffe nach Anspruch 3, dadurch gekennzeichnet, daß die Hemmittel einen Endteil (5) der Muffe (1) aufweisen, der dem Verlängerungsstück (6) gegenüberliegt und so verformt ist, daß es eine fast elliptische Form annimmt.

5. Montierte Vorrichtung, bestehend aus einem ein Gewindeloch (10) aufweisenden Gegenstand und einem an diesem Gegenstand (O) mit Hilfe einer Schraube befestigten Teil, gekennzeichnet durch eine Muffe (1) nach einem der Ansprüche 1 bis 4, wobei die Muffe (1) in das Loch (10) des Gegenstandes (O) eingesetzt und ihr Verlängerungsstück (6) durch Knickung verformt ist und mit den Gewindegängen an der Öffnung des Gewindeloches (10) zusammengreift.

0 016 669

**FIG.3**

**FIG.1**

**FIG.4**

**FIG.5**

**FIG.6**

**FIG.2**